(19) Europäisches Patentamt
European Patent Office
Office européen des brevets

(11) EP 4 535 493 B1

(12) # EUROPEAN PATENT SPECIFICATION

(45) Date of publication and mention of the grant of the patent:
**13.05.2026 Bulletin 2026/20**

(21) Application number: **23839873.9**

(22) Date of filing: **05.07.2023**

(51) International Patent Classification (IPC):
***H01M 10/0567*** *(2010.01)* ***H01M 10/052*** *(2010.01)*
***H01M 4/525*** *(2010.01)* ***H01M 4/505*** *(2010.01)*
***H01M 4/131*** *(2010.01)* ***H01M 10/0525*** *(2010.01)*
***H01M 10/0569*** *(2010.01)*

(52) Cooperative Patent Classification (CPC):
**H01M 10/0567; H01M 4/131; H01M 10/0525; H01M 10/0569;** H01M 2300/0025; Y02E 60/10

(86) International application number:
**PCT/KR2023/009507**

(87) International publication number:
**WO 2024/014780 (18.01.2024 Gazette 2024/03)**

(54) **NON-AQUEOUS ELECTROLYTE SOLUTION FOR LITHIUM SECONDARY BATTERY AND LITHIUM SECONDARY BATTERY INCLUDING THE SAME**

WASSERFREIER ELEKTROLYTLÖSUNG FÜR LITHIUMSEKUNDÄRBATTERIE UND LITHIUMSEKUNDÄRBATTERIE DAMIT

SOLUTION ÉLECTROLYTIQUE NON AQUEUX POUR BATTERIE SECONDAIRE AU LITHIUM ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.07.2022 KR 20220085281**

(43) Date of publication of application:
**09.04.2025 Bulletin 2025/15**

(73) Proprietor: **LG Energy Solution, Ltd.**
**Seoul 07335 (KR)**

(72) Inventors:
- **JI, Su Hyeon**
  **Daejeon 34122 (KR)**
- **LEE, Chul Haeng**
  **Daejeon 34122 (KR)**
- **LEE, Kyung Mi**
  **Daejeon 34122 (KR)**
- **LEE, Jung Min**
  **Daejeon 34122 (KR)**
- **YEOM, Chul Eun**
  **Daejeon 34122 (KR)**
- **HAN, Jung Gu**
  **Daejeon 34122 (KR)**
- **CHO, Yoon Gyo**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 131 153**
**WO-A1-2011/043403**
**JP-A- 2003 092 137**
**JP-A- 2014 099 321**
**JP-A- H09 139 233**
**JP-A- H09 139 233**
**KR-A- 20200 092 889**
**US-A1- 2012 065 407**
**US-A1- 2012 077 076**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 535 493 B1

## Description

### TECHNICAL FIELD

This application claims priority from Korean Patent Application Nos. 10-2022-0085281, filed on July 11, 2022, and 10-2023-0086887, filed on July 5, 2023.

The present invention relates to a non-aqueous electrolyte solution for a lithium secondary battery and a lithium secondary battery including the same.

### BACKGROUND ART

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte solution that becomes a medium for transferring the lithium ions is injected thereinto and the battery case is then sealed.

Since the lithium secondary battery may be miniaturized and has high energy density and working voltage, it is being used in various fields such as mobile devices, electronic products, and electric vehicles. As the field of application of the lithium secondary battery is diversified, physical property conditions required are also gradually increasing, and, particularly, development of a lithium secondary battery, which may be stably operated even under high-temperature conditions and has long life characteristics, is required.

In a case in which the lithium secondary battery is operated under high-temperature conditions, $PF_6^-$ anions may be thermally decomposed from a lithium salt, such as $LiPF_6$, contained in the electrolyte solution to generate a Lewis acid such as $PF_5$, and this reacts with moisture to generate HF. Decomposition products, such as $PF_5$ and HF, may not only destroy a film formed on a surface of the electrode, but also may cause a decomposition reaction of an organic solvent and may react with a decomposition product of the positive electrode active material to dissolve transition metal ions, and the dissolved transition metal ions may be electrodeposited on the negative electrode to destroy a film formed on a surface of the negative electrode.

Since performance of the battery is further degraded if the electrolyte decomposition reaction continues on the destroyed film as described above, there is a need to develop a secondary battery capable of maintaining excellent performance even under high-temperature conditions. WO 2011/043403 discloses electrolyte solutions comprising substituted pyrazole additives.

### DISCLOSURE OF THE INVENTION

### TECHNICAL PROBLEM

An aspect of the present invention provides a non-aqueous electrolyte solution, which may form a stable film on an electrode and may control metal dissolution by including a R2-substituted pyrazolecarboxylic acid-derived compound and accordingly may contribute to improve performance of a lithium secondary battery, and a lithium secondary battery including the same.

### TECHNICAL SOLUTION

According to an aspect of the present invention, there is provided a non-aqueous electrolyte solution for a lithium secondary battery which includes: a lithium salt; an organic solvent; and a compound represented by Formula 1.

[Formula 1]

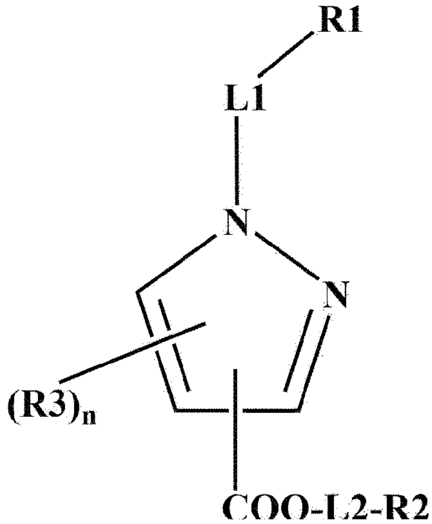

In Formula 1,

L1 is a direct bond or an alkylene group having 1 to 10 carbon atoms,
R1 is an alkyl group having 1 to 10 carbon atoms or a nitrile group,
L2 is a direct bond, an alkylene group having 1 to 10 carbon atoms, an alkyleneoxy group having 1 to 10 carbon atoms, or a sulfonyl group,
R2 is a fluorine-substituted or unsubstituted alkyl group having 1 to 10 carbon atoms, a nitrile group, or an isocyanate group,
R3 is a fluorine-substituted or unsubstituted alkyl group having 1 to 10 carbon atoms,
n is an integer of any one of 0 to 2, and when n is 2, the two R3s are the same or different from each other.

According to another aspect of the present invention, there is provided a lithium secondary battery including: a positive electrode including a positive electrode active material; a negative electrode including a negative electrode active material; a separator disposed between the positive electrode and the negative electrode; and the non-aqueous electrolyte solution for a lithium secondary battery. The invention is defined in the appended claims.

## ADVANTAGEOUS EFFECTS

A non-aqueous electrolyte solution according to the present invention may contribute to improve high-temperature performance of a lithium secondary battery by including a compound represented by Formula 1 which has a function of strengthening a positive electrode/negative electrode film and controlling dissolved metal. Particularly, since the compound includes a functional group based on fluorine, sulfur, and nitrogen in its structure, it may contribute to improve stability and safety of the battery through formation of an organic/inorganic composite film. Also, since an interaction with transition metal is possible through nitrogen (N) and COO functional groups which are included in the compound represented by Formula 1, electrodeposition of the dissolved metal to the negative electrode may be prevented and a lithium secondary battery with improved electrochemical properties may eventually be provided.

## MODE FOR CARRYING OUT THE INVENTION

Hereinafter, the present invention will be described in more detail.

In general, anions included in a lithium salt, such as $LiPF_6$, which is widely used in an electrolyte solution for a lithium secondary battery, form decomposition products, such as hydrogen fluoride (HF) and $PF_5$, due to thermal decomposition or moisture. These decomposition products have acidic properties and deteriorate a film or electrode surface in the battery.

Transition metals in a positive electrode are easily dissolved into the electrolyte solution due to the decomposition products of the electrolyte solution and structural changes of the positive electrode according to repeated charge and discharge, and the dissolved transition metals are re-deposited on the positive electrode to increase resistance of the positive electrode. In addition, in a case in which the dissolved transition metals move to a negative electrode through the electrolyte solution, the dissolved transition metals are electrodeposited on the negative electrode to form dendrites, and

may cause destruction of a solid electrolyte interphase (SEI) film and an additional electrolyte decomposition reaction, and, as a result, problems, such as consumption of lithium ions and an increase in resistance, occur.

Furthermore, a protective film is formed on the positive electrode and the negative electrode by an electrolyte solution reaction during initial activation of the battery, wherein, in a case in which the film becomes unstable for the above reason, additional decomposition of the electrolyte solution occurs during charge-discharge or high-temperature exposure to promote degradation of the battery and generate gas.

In order to solve these problems, the present inventors included the compound represented by Formula 1 in the non-aqueous electrolyte solution, and, accordingly, found that there was an effect of reducing an electrolyte solution side reaction at the positive electrode/negative electrode, and suppressing the dissolution of transition metal, the gas generation, and the increase in cell resistance. Particularly, an increase in operating voltage of the cell is inevitable in order to secure high energy density, and the above-described performance degradation problem may be further intensified when the operating voltage is increased, wherein this problem may be solved by using the compound represented by Formula 1.

Hereinafter, each component constituting the present invention will be described in more detail.

## Non-aqueous Electrolyte Solution

The present invention provides a non-aqueous electrolyte solution for a lithium secondary battery which includes: a lithium salt; an organic solvent; and a compound represented by Formula 1.

Hereinafter, each component will be described in detail.

### (1) Compound Represented by Formula 1

The non-aqueous electrolyte solution of the present invention includes a compound represented by Formula 1 below.

[Formula 1]

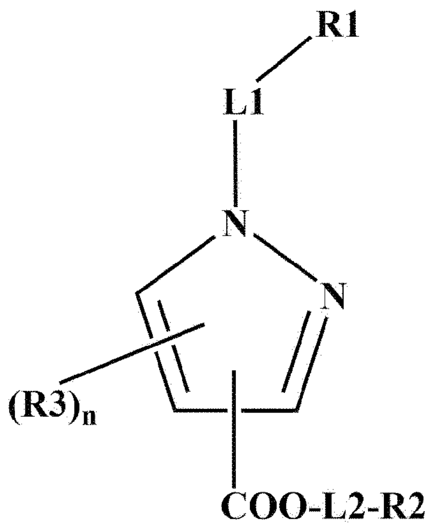

In Formula 1,

L1 is a direct bond or an alkylene group having 1 to 10 carbon atoms,
R1 is an alkyl group having 1 to 10 carbon atoms or a nitrile group (-CN),
L2 is a direct bond, an alkylene group having 1 to 10 carbon atoms, an alkyleneoxy group having 1 to 10 carbon atoms, or a sulfonyl group ($-SO_2-$),
R2 is a fluorine-substituted or unsubstituted alkyl group having 1 to 10 carbon atoms, a nitrile group, or an isocyanate group (-NCO),
R3 is a fluorine-substituted or unsubstituted alkyl group having 1 to 10 carbon atoms,
n is an integer of any one of 0 to 2, and when n is 2, the two R3s are the same or different from each other.

Since the compound represented by Formula 1 includes an unshared electron pair in an ester (-COO-) and a

bond (N-N) between nitrogens in pyrazole, a stable film may be formed through strong binding to transition metal on a surface of a positive electrode. In addition, since it may bond to metal ions through the unshared electron pair even in the electrolyte solution, electrodeposition to a negative electrode may be prevented in advance. Also, in a case in which an ester functional group is included as in Formula 1 of the present application, since ability to move lithium (Li) through the unshared electron pair of oxygen is excellent during the formation of the film, it is desirable in terms of being able to form a film that helps to improve output of a battery in comparison to a structure in which a sulfonyl group or a fluorine (F)-based substituent is directly substituted for pyrazole.

In an embodiment of the present invention, R1 in Formula 1 may be an alkyl group having 1 to 5 carbon atoms or a nitrile group, and may specifically be a methyl group or a nitrile group. In a case in which an alkyl group or a nitrile group is substituted instead of hydrogen at R1 position, since acidification of the electrolyte solution and the resulting side reaction may be suppressed by preventing an increase in $H^+$ due to deprotonation, there is an effect of improving durability of the battery. Particularly, in a case in which the nitrile group is substituted, it is more desirable in that a metal ion scavenging effect may be additionally expected by the unshared electron pair.

In an embodiment of the present invention, R2 in Formula 1 is an alkyl group having 1 to 5 carbon atoms, a fluoroalkyl group having 1 to 5 carbon atoms, or an isocyanate group, and is preferably a methyl group, a trifluoromethyl group, or an isocyanate group. In a case in which R2 is hydrogen, there is a problem in that acidity of the electrolyte solution is increased due to the deprotonation in which $H^+$ is removed from -COOH.

In an embodiment of the present invention, R3 in Formula 1 may be a fluorine-substituted alkyl group having 1 to 10 carbon atoms, particularly a fluorine-substituted alkyl group having 1 to 5 carbon atoms, and more particularly a trifluoromethyl group.

In an embodiment of the present invention, n in Formula 1 may be 0 or 1, and preferably, n=1. In comparison to a case in which n = 0 in Formula 1, in a case in which n = 1, a film with improved high-temperature performance may be formed. Specifically, if fluorine is included in the structure, oxidation stability is improved, and this means that a stable film may be formed on the positive electrode. If an unstable film is formed on the positive electrode, performance may be degraded due to an electrolyte solution decomposition reaction under a high voltage, wherein it has an effect of preventing the degradation. Furthermore, since a film containing fluorine is formed during reduction at the negative electrode, it may be composited with an organic film formed by pyrazole to form an organic/inorganic composite film. That is, it is desirable in that an SEI is formed in which a life performance improvement effect of the organic film and an advantage of strong durability of the inorganic film are achieved together.

In an embodiment of the present invention, the compound represented by Formula 1 may be represented by Formula 1-1 or Formula 1-2 below.

[Formula 1-1]

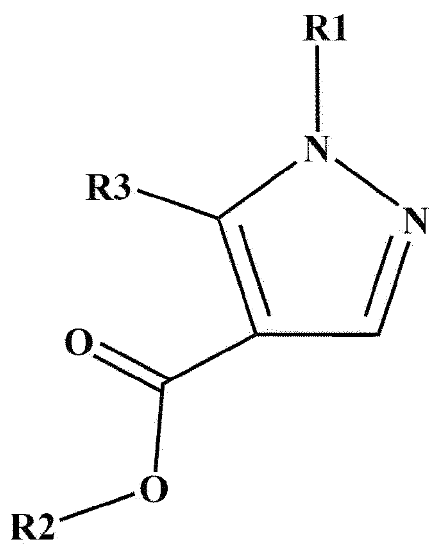

[Formula 1-2]

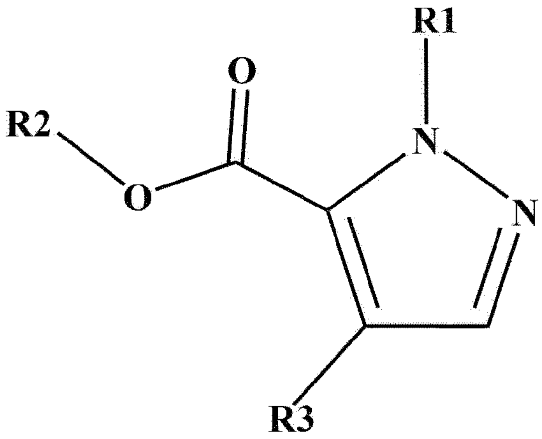

In Formulae 1-1 and 1-2,
R1 to R3 are as defined in Formula 1.

In an embodiment of the present invention, Formula 1 may be represented by any one of Formulae 1A to 1F below.

[Formula 1A]

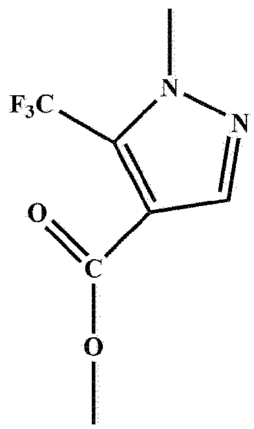

[Formula 1B]

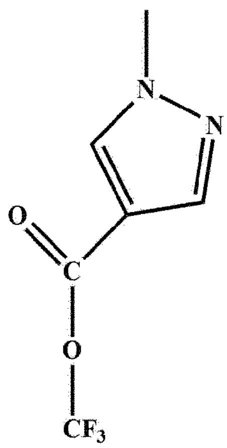

[Formula 1C]

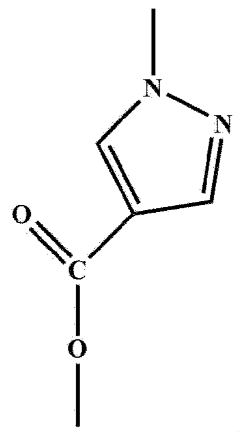

[Formula 1D]

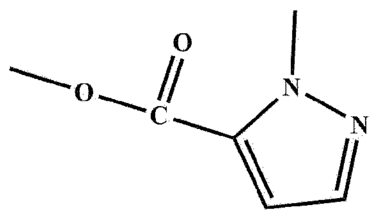

[Formula 1E]

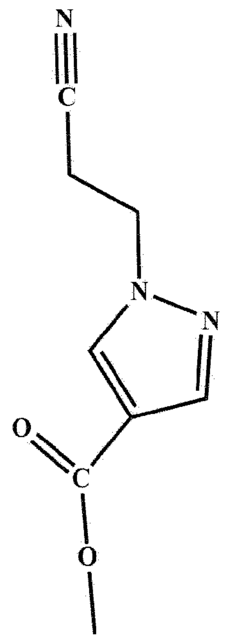

[Formula 1F]

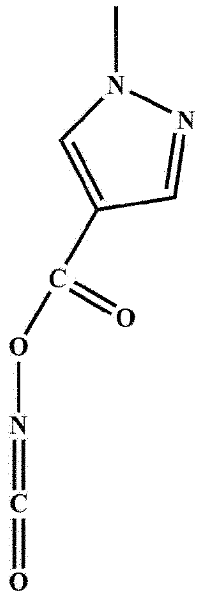

In an embodiment of the present invention, an amount of the compound represented by Formula 1 may be in a range of 0.01 wt% to 15 wt%, preferably 0.03 wt% to 12 wt%, and more preferably 0.05 wt% to 10 wt% based on a total weight of the non-aqueous electrolyte solution.

When the amount of the compound represented by Formula 1 is 0.01 wt% or more, the above-described effect may be achieved, and, when the amount is 15 wt% or less, it is desirable in that a decrease in ionic conductivity of the non-aqueous electrolyte solution is prevented and formation of a non-uniform film on the surface of the electrode or an increase in side reaction is prevented.

**(2) Additive**

In order to prevent the electrolyte solution from being decomposed to cause collapse of the electrode in a high-voltage environment, or further improve low-temperature high-rate discharge characteristics, high-temperature stability, overcharge protection, and a battery swelling suppression effect at high temperatures, the non-aqueous electrolyte solution of the present invention may optionally further include the following additives, if necessary.

The additive may be at least one selected from the group consisting of a cyclic carbonate-based compound, a sultone-based compound, a sulfate-based compound, a phosphorus-based compound, a nitrile-based compound, an amine-based compound, a silane-based compound, a benzene-based compound, and a lithium salt-based compound.

The cyclic carbonate-based compound may be at least one selected from the group consisting of vinylene carbonate (VC), vinylethylene carbonate (VEC),and fluoroethylene carbonate (FEC), and may specifically be vinylene carbonate.

The sultone-based compound is a material capable of forming a stable SEI film by a reduction reaction on the surface of the negative electrode, wherein the sultone-based compound may be at least one compound selected from the group consisting of 1,3-propane sultone (PS), 1,4-butane sultone, ethane sultone, 1,3-propene sultone (PRS), 1,4-butene sultone, and 1-methyl-1,3-propenesultone, and may specifically be 1,3-propane sultone (PS).

The sulfate-based compound is a material which may be electrically decomposed on the surface of the negative electrode to form a stable SEI film that does not crack even during high-temperature storage, wherein the sulfate-based compound may be at least one selected from the group consisting of ethylene sulfate (Esa), trimethylene sulfate (TMS),or methyl trimethylene sulfate (MTMS).

The phosphorus-based compoundmay be a phosphate-based or phosphite-based compound, and specifically, may be at least one selected from the group consisting of tris(trimethylsilyl)phosphate,tris(trimethylsilyl)phosphite, tris(2,2,2-trifluoroethyl)phosphate, and tris(trifluoroethyl)phosphite.

The nitrile-based compound may be at least one selected from the group consisting of succinonitrile (SN), adiponitrile (ADN), acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl) ether (ASA3), 1,3, 6-hexanetricarbonitrile (HTCN), 1,4-dicyano 2-butene (DCB), and 1,2,3-tris(2-cyanoethyl)propane (TCEP).

The amine-based compound may be at least one selected from the group consisting of triethanolamine and ethylenediamine, and the silane-based compound may be tetravinylsilane.

The benzene-based compound may be at least one selected from the group consisting of monofluorobenzene, difluorobenzene, trifluorobenzene, and tetrafluorobenzene.

The lithium salt-based compound is a compound different from the lithium salt included in the non-aqueous electrolyte solution, wherein the lithium salt-based compound may be at least one compound selected from the group consisting of lithium difluorophosphate (LiDFP; $LiPO_2F_2$), lithium bis(oxalato)borate (LiBOB; $LiB(C_2O_4)_2$), lithium tetrafluoroborate ($LiBF_4$), lithium tetraphenylborate,and lithium difluorobis(oxalato)phosphate (LiDFOP).

Preferably, the non-aqueous electrolyte solution according to an embodiment of the present invention may further include at least one additive selected from the group consisting of vinylene carbonate (VC), vinyl ethylene carbonate (VEC), 1,3-propane sultone (PS), ethylene sulfate (ESa), lithium tetrafluoroborate ($LiBF_4$), lithium difluoro(oxalato)borate (LiODFB), and lithium difluorophosphate (LiDFP), and may more preferably include vinyl ethylene carbonate (VEC). In this case, there is an effect of increasing a residual amount of the compound capable of binding to $PF_5$ by suppressing decomposition of the compound represented by Formula 1 of the present invention through rapid film formation on the positive electrode and the negative electrode. This is an effect resulting from the unshared electron pair of nitrogen in a pyrazole structure. Since the unshared electron pair in the pyrazole structure acts as a Lewis base, additional decomposition of the $PF_5$, a Lewis acid, may be prevented in advance. Since the decomposition of the Lewis acid causes an increase in resistance due to a side reaction in the electrode film and a by-product, it may be a factor degrading performance of the battery.

An amount of the additive may be in a range of 0.1 wt% to 10 wt%, preferably 0.3 wt% to 5 wt%, and more preferably 0.3 wt% to 1 wt% based on the total weight of the non-aqueous electrolyte solution. When the amount of the additive is within the above range, there is an effect of suppressing the side reaction through film formation on the positive electrode and the negative electrode.

**(3) Organic Solvent**

The non-aqueous electrolyte solution of the present invention includes an organic solvent.

Various organic solvents typically used in a lithium electrolyte may be used as the organic solvent without limitation. For example, the organic solvent may be a cyclic carbonate-based solvent, a linear carbonate-based solvent, a linear ester-based solvent, a cyclic ester-based solvent, a nitrile-based solvent, or a mixture thereof, may preferably include a mixture of at least two selected from the group consisting of a cyclic carbonate-based solvent, a linear carbonate-based solvent, and a linear ester-based solvent, and may more preferably include a mixture of a cyclic carbonate-based solvent and a linear carbonate-based solvent.

The cyclic carbonate-based solvent may well dissociate a lithium salt in the electrolyte due to highpermittivity as a highly viscous organic solvent, wherein the cyclic carbonate-based solvent may be at least one selected from the group consisting of ethylene carbonate (EC),propylene carbonate (PC), 1,2-butylene carbonate, 2,3-butylene carbonate, 1,2-pentylene carbonate, 2,3-pentylene carbonate, and vinylene carbonate, and, preferably, may include ethylene carbonate (EC) or propylene carbonate (PC).

Also, the linear carbonate-based solvent is an organic solvent having low viscosity and low permittivity, wherein the linear carbonate-based solvent may be at least one selected from the group consisting of dimethyl carbonate (DMC),diethyl carbonate (DEC),dipropyl carbonate, ethylmethyl carbonate (EMC), methylpropyl carbonate, and ethylpropyl carbonate, and may preferably include ethylmethyl carbonate (EMC), dimethyl carbonate (DMC),or diethyl carbonate (DEC).

In order to prepare an electrolyte solution having high ionic conductivity, it is desirable that a mixture of the cyclic carbonate-based solvent and the linear carbonate-based solvent is used as the organic solvent.

The linear ester-based solvent may be at least one selected from the group consisting of methyl acetate, ethyl acetate, propyl acetate, methyl propionate, ethyl propionate, propyl propionate, and butyl propionate, and may preferably be methyl propionate, ethyl propionate, or propyl propionate.

The cyclic ester-based solvent may be at least one selected from the group consisting of γ-butyrolactone, γ-valerolactone, γ-caprolactone, σ-valerolactone, and ε-caprolactone.

The nitrile-based solvent may be at least one selected from the group consisting of succinonitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may preferably be succinonitrile.

A remainder excluding other components except for the organic solvent, for example, the amounts of the compound represented by Formula 1, the additive, and the lithium salt, in the total weight of the non-aqueous electrolyte solution may all be the organic solvent unless otherwise stated.

### (4) Lithium Salt

The non-aqueous electrolyte solution of the present invention includes a lithium salt.

Any lithium salt typically used in an electrolyte solution for a lithium secondary battery may be used as the lithium salt without limitation, and, specifically, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF^-$, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$as an anion.

Specifically, the lithium salt may be at least one selected from the group consisting of $LiPF_6$, $LiClO_4$, $LiBF_4$, lithium bis(fluorosulfonyl)imide($LiN(FSO_2)_2$; LiFSI), lithium bis(trifluoromethanesulfonyl)imide(LiTFSI), lithium bis(pentafluoroethanesulfonyl)imide (LiBETI), lithium trifluoromethanesulfonate($LiSO_3CF_3$), lithium difluorophosphate ($LiPO_2F_2$), lithium bis (oxalate)borate (LiBOB), lithium difluoro(oxalate)borate (LiFOB), lithium difluoro (bisoxalato)phosphate (LiDFOP), lithium tetrafluoro(oxalate)phosphate (LiTFOP), and lithium fluoromalonato(difluoro)borate (LiFMDFB), and may preferably be $LiPF_6$.

In an embodiment of the present invention, a concentration of the lithium salt in the non-aqueous organic solution containing the lithium salt and the organic solvent may be in a range of 0.5 M to 4.0 M, particularly 0.5 M to 3.0 M, and more particularly 0.8 M to 2.0 M. When the concentration of the lithium salt is within the above range, adequate electrolyte impregnability may be obtained by preventing excessive increases in viscosity and surface tension while sufficiently securing an effect of improving low-temperature output and improving cycle characteristics.

## Lithium Secondary Battery

Next, a lithium secondary battery according to the present invention will be described.

The lithium secondary battery according to the present invention includes a positive electrode including a positive electrode active material, a negative electrode including a negative electrode active material, a separator disposed between the positive electrode and the negative electrode, and anon-aqueous electrolyte solution. In this case, the non-aqueous electrolyte solution is the above-described non-aqueous electrolyte solution according to the present invention. Since the non-aqueous electrolyte solution has been described above, a description thereof will be omitted and other components will be described below.

### (1) Positive Electrode

The positive electrode according to the present invention includes a positive electrode active material, and may be prepared by coating a positive electrode current collector with a positive electrode slurry including the positive electrode active material, a binder, a conductive agent, and a solvent, and then drying and rolling the coated positive electrode current collector.

The positive electrode current collector is not particularly limited so long as it has conductivity without causing adverse chemical changes in the battery, and, for example, stainless steel; aluminum; nickel; titanium; fired carbon; or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from the group consisting of LCO($LiCoO_2$); LNO($LiNiO_2$); LMO($LiMnO_2$); $LiMn_2O_4$; $LiCoPO_4$; LFP($LiFePO_4$); and a lithium composite transition metal oxide containing nickel (Ni), cobalt (Co), and manganese (Mn). For example, the positive electrode active material may be lithium-nickel-manganese-cobalt-based oxide represented by $Li(Ni_pCo_qMn_{r1})O_2$ ($0<p<1$, $0<q<1$, $0<r1<1$, and $p+q+r1=1$) , lithium-nickel-manganese-cobalt-based oxide represented by $Li(Ni_{p1}Co_{q1}Mn_{r2})O_4$($0<p1<2$, $0<q1<2$, $0<r2<2$, and $p1+q1+r2=2$), or lithium-nickel-cobalt-transition metal (M) oxide represented by $Li(Ni_{p2}Co_{q2}Mn_{r3}M_{s2})O_2$ (M is selected from the group consisting of aluminum (Al), iron (Fe), vanadium (V), chromium (Cr), titanium (Ti), tantalum (Ta), magnesium (Mg), and molybdenum (Mo), and $0<p2<1$, $0<q2<1$, $0<r3<1$, $0<S2<1$, and $p2+q2+r3+S2=1$).

The positive electrode active material may have a molar ratio of nickel among transition metals of 60 mol% or more, preferably 70 mol% or more, and more preferably 80 mol% or more.

In an embodiment of the present invention, the lithium composite transition metal oxide may be a compound represented by Formula 2 below. That is, the positive electrode active material according to an embodiment of the present invention may include a lithium composite transition metal oxide represented by Formula 2 below.

[Formula 2] $$Li_{1+x}(Ni_aCo_bMn_cM_d)O_2$$

In Formula 2,

M is at least one selected from the group consisting of tungsten (W), copper (Cu), Fe, V, Cr, Ti, zirconium (Zr), zinc (Zn), Al, indium (In), Ta, yttrium (Y), lanthanum (La), strontium (Sr), gallium (Ga), scandium (Sc), gadolinium (Gd), samarium (Sm), calcium (Ca), cerium (Ce), niobium (Nb), Mg, boron (B), and Mo, and

1+x, a, b, c, and d are atomic fractions of each independent element,

wherein $-0.2 \leq x \leq 0.2$, $0.6 \leq a < 1$, $0 < b \leq 0.3$, $0 < c \leq 0.3$, $0 \leq d \leq 0.1$, and $a+b+c+d=1$.

1+x represents a molar ratio of lithium in the lithium composite transition metal oxide, wherein x may satisfy $-0.1 \leq x \leq 0.2$ or $0 \leq x \leq 0.2$. When the molar ratio of the lithium satisfies the above range, a crystal structure of the lithium composite transition metal oxide may be stably formed.

a represents a molar ratio of nickel among total metals excluding lithium in the lithium composite transition metal oxide, wherein a may satisfy $0.70 \leq a < 1$, $0.75 \leq a < 1$, or $0.80 \leq a < 1$. When the molar ratio of the nickel satisfies the above range, since high energy density may be exhibited, high capacity may be achieved.

b represents a molar ratio of cobalt among the total metals excluding lithium in the lithium composite transition metal oxide, wherein b may satisfy $0 < b \leq 0.20$, $0 < b \leq 0.18$, or $0 < b \leq 0.15$. When the molar ratio of the cobalt satisfies the above range, good resistance characteristics and output characteristics may be achieved.

c represents a molar ratio of manganese among the total metals excluding lithium in the lithium composite transition metal oxide, wherein c may satisfy $0 < c \leq 0.20$, $0 < c \leq 0.18$, or $0 < c \leq 0.15$. When the molar ratio of the manganese satisfies the above range, structural stability of the positive electrode active material is excellent.

In an embodiment of the present invention, the lithium composite transition metal oxide may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo. In other words, d representing a molar ratio of the doping element among the total metals excluding lithium in the lithium composite transition metal oxide may satisfy $0 < d \leq 0.10$, $0 < d \leq 0.08$, or $0 < d \leq 0.05$.

Preferably, a, b, c, and d in Formula 2 may satisfy $0.70 \leq a < 1$, $0 < b \leq 0.2$, $0 < c \leq 0.2$, and $0 \leq d \leq 0.1$, respectively.

In another embodiment of the present invention, the lithium composite transition metal oxide may be at least one selected from the group consisting of $Li_pMn_{1-q}M_qA_2$, $Li_pMn_2O_{4-r}X_r$, $Li_pMn_{2-q}M_qM'_rA_4$, $Li_pCo_{1-q}M_qA_2$, $Li_pCo_{1-q}M_qO_{2-r}X_r$, $Li_pNi_{1-q}M_qO_{2-r}X_r$, $Li_pNi_{1-q}CO_qO_{2-r}X_r$, $Li_pNi_{1-q-r}CO_qM_rA_w$, $Li_pNi_{1-q-r}Co_qM_rO_{2-w}X_w$, $Li_pNi_{1-q-r}Mn_qM_rA_w$, and $Li_pNi_{1-q-r}Mn_qM_rO_{2-w}X_w$, wherein p, q, r, and w satisfy $0.9 \leq p \leq 1.2$, $0 \leq q \leq 1$, $0 \leq r \leq 1$, and $0 \leq w \leq 2$, respectively, M and M' are the same or different from each other and are one or more elements selected from the group consisting of Mg, Al, Co, potassium (K), sodium (Na), Ca, silicon (Si), Ti, tin (Sn), V, germanium (Ge), Ga, B, arsenic (As), Zr, Mn, Cr, Fe, Sr, V, and rare earth elements, A is at least one element selected from the group consisting of oxygen (O), F, sulfur(S), and phosphorus (P), and X is at least one element selected from the group consisting of F, S and P.

The positive electrode active material may be included in an amount of 80 wt% to 99 wt%, specifically, 90 wt% to 99 wt% based on a total weight of solid content in the positive electrode slurry. In a case in which the amount of the positive electrode active material is 80 wt% or less, since energy density is reduced, capacity may be reduced.

The binder is a component that assists in the binding between the active material and the conductive agent and in the binding with the current collector, wherein the binder may be commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

Also, the conductive agent is a material providing conductivity without causing adverse chemical changes in the battery, wherein it may be added in an amount of 0.5wt% to 20wt% based on the total weight of the solid content in the positive electrode slurry.

The conductive agent, for example, may be selected from a conductive material, such as: carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as fluorocarbon powder, aluminum powder, and nickel powder; conductive whiskers such as zinc oxide whiskers and potassium titanate whiskers; conductive metal oxide such as titanium oxide; and polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry including the positive electrode active material, the binder, and the conductive agent is in a range of 40 wt% to 90 wt%, preferably, 50 wt% to 80 wt%.

**(2) Negative Electrode**

The negative electrode according to the present invention includes a negative electrode active material, and may be prepared by coating a negative electrode current collector with a negative electrode slurry including the negative electrode active material, a binder, a conductive agent, and a solvent, and then drying and rolling the coated negative electrode current collector.

The negative electrode current collector generally has a thickness of 3 $\mu$m to 500 $\mu$m. The negative electrode collector is not particularly limited so long as it has high conductivity without causing adverse chemical changes in the battery, and, for example, copper; stainless steel; aluminum; nickel; titanium; fired carbon; copper or stainless steel that is surface-treated with one of carbon, nickel, titanium, silver, or the like;or an aluminum-cadmium alloy may be used. Also, similar to the positive electrode current collector, the negative electrode current collector may have fine surface roughness to improve bonding strength with the negative electrode active material, and the negative electrode current collector may be used in various shapes such as a film, a sheet, a foil, a net, a porous body, a foam body, a non-woven fabric body, and the like.

Furthermore, the negative electrode active material may include at least one selected from the group consisting of a carbon material capable of reversibly intercalating/deintercalating lithium ions; metal or an alloy of lithium and the metal; a metal composite oxide; a material which may be doped and undoped with lithium; lithium metal; and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

At least one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (Me: Mn, Fe, Pb, or Ge; Me': Al, B, P, Si, Groups I, II and III elements of the periodic table, or halogen; $0<x \leq 1$; $1 \leq y \leq 3$; $1 \leq z \leq 8$) may be used as the metal composite oxide.

The material, which may be doped and undoped with lithium, may include Si, $SiO_x$ ($0<x<2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B,Al, Ga, Sn, In, Ge, P, As, Sb, bismuth (Bi), S, selenium (Se), tellurium (Te), polonium (Po), and a combination thereof.

Examples of the transition metal oxide may be lithium-containing titanium composite oxide (LTO), vanadium oxide, and lithium vanadium oxide.

In an embodiment of the present invention, the negative electrode active material may be a mixture of the carbon-based material and the silicon-based material, and may preferably be a mixture of graphite and SiO.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The conductive agent is a component for further improving the conductivity of the negative electrode active material, wherein the conductive agent may be added in an amount of 0.5 wt% to 20 wt% based on the total weight of the solid content in the negative electrode slurry. Any conductive agent may be used without particular limitation so long as it has conductivity without causing adverse chemical changes in the battery, and, for example, a conductive material, such

as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibersor metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives, may be used.

The solvent of the negative electrode slurry may include water; or an organic solvent, such as NMP and alcohol, and may be used in an amount such that desirable viscosity is obtained when the negative electrode active material, the binder, and the conductive agent are included. For example, the solvent may be included in an amount such that a concentration of a solid content in the slurry including the negative electrode active material, the binder, and the conductive agent is in a range of 30 wt% to 80 wt%, preferably, 40 wt% to 70 wt%.

**(3) Separator**

The lithium secondary battery according to the present invention includes a separator between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution and excellent safety as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The lithium secondary battery according to the present invention as described above may be suitably used in portable devices, such as mobile phones, notebook computers, and digital cameras; and electric cars such as a hybrid electric vehicle (HEV) .

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

**<Examples: Preparation of Lithium Secondary Batteries>**

**Example 1.**

1) Preparation of Non-aqueous Electrolyte Solution

After ethylene carbonate (EC):ethylmethyl carbonate (EMC) were mixed in a volume ratio of 30:70, a non-aqueous organic solution was prepared by dissolving $LiPF_6$ such that a concentration of the $LiPF_6$ was 1 M. 100 wt% of a non-aqueous electrolyte solution was prepared by mixing 0.05 wt% of the compound represented by Formula 1A and the non-aqueous organic solution as a remainder.

2) Preparation of Lithium Secondary Battery

$Li(Ni_{0.8}Co_{0.1}Mn_{0.1})O_2$ as a positive electrode active material, a conductive agent (carbon black), and a binder (polyvinylidene fluoride) were added in a weight ratio of 98:1:1 to N-methyl-2-pyrrolidone (NMP) to prepare a positive electrode slurry (solid content: 60 wt%). A 15μm thick aluminum (Al) thin film, as a positive electrode current collector, was coated with the positive electrode slurry, dried, and then roll-pressed to prepare a positive electrode.

Graphite as a negative electrode active material, SBR-CMC as a binder, and carbon black, as a conductive agent, were added in a weight ratio of 95:3.5:1.5 to water, as a solvent, to prepare a negative electrode slurry(solid content: 60 wt%). A 10um thick copper (Cu) thin film, as a negative electrode current collector, was coated with the negative electrode slurry, dried, and then roll-pressed to prepare a negative electrode.

An electrode assembly was prepared by sequentially stacking the positive electrode, a polyolefin-based porous separator coated with inorganic particles ($Al_2O_3$), and the negative electrode.

The electrode assembly prepared was accommodated in a pouch type battery case, and 5 mL of the above-prepared non-aqueous electrolyte solution was injected thereinto to prepare a lithium secondary battery.

**Example 2.**

A lithium secondary battery was prepared in the same manner as in Example 1 except that 0.5 wt% of vinylethylene carbonate (VEC) was further added during the preparation of the non-aqueous electrolyte solution.

**Example 3.**

A lithium secondary battery was prepared in the same manner as in Example 1 except that an amount of the compound represented by Formula 1A was changed to 10 wt% during the preparation of the non-aqueous electrolyte solution.

**Example 4.**

A lithium secondary battery was prepared in the same manner as in Example 3 except that 0.5 wt% of vinylethylene carbonate (VEC) was further added during the preparation of the non-aqueous electrolyte solution.

**Example 5.**

A lithium secondary battery was prepared in the same manner as in Example 1 except that the compound represented by Formula 1B was used instead of the compound represented by Formula 1A during the preparation of the non-aqueous electrolyte solution.

**Example 6.**

A lithium secondary battery was prepared in the same manner as in Example 5 except that an amount of the compound represented by Formula 1B was changed to 10 wt% during the preparation of the non-aqueous electrolyte solution.

**Example 7.**

A lithium secondary battery was prepared in the same manner as in Example 1 except that the compound represented by Formula 1C was used instead of the compound represented by Formula 1A during the preparation of the non-aqueous electrolyte solution.

**Example 8.**

A lithium secondary battery was prepared in the same manner as in Example 7 except that an amount of the compound represented by Formula 1C was changed to 10 wt% during the preparation of the non-aqueous electrolyte solution.

**Example 9.**

A lithium secondary battery was prepared in the same manner as in Example 1 except that the compound represented by Formula 1D was used instead of the compound represented by Formula 1A during the preparation of the non-aqueous electrolyte solution.

**Example 10.**

A lithium secondary battery was prepared in the same manner as in Example 1 except that the compound

represented by Formula 1E was used instead of the compound represented by Formula 1A during the preparation of the non-aqueous electrolyte solution.

**Example 11.**

A lithium secondary battery was prepared in the same manner as in Example 1 except that the compound represented by Formula 1F was used instead of the compound represented by Formula 1A during the preparation of the non-aqueous electrolyte solution.

**Comparative Example 1.**

A lithium secondary battery was prepared in the same manner as in Example 1 except that the compound represented by Formula 1A was not added during the preparation of the non-aqueous electrolyte solution.

**Comparative Example 2.**

A lithium secondary battery was prepared in the same manner as in Comparative Example 1 except that 0.5 wt% of vinylethylene carbonate (VEC) was further added during the preparation of the non-aqueous electrolyte solution.

**Comparative Example 3.**

A lithium secondary battery was prepared in the same manner as in Example 1 except that a compound represented by the following Formula Z1 was used instead of the compound represented by Formula 1A during the preparation of the non-aqueous electrolyte solution.

[Formula Z1]

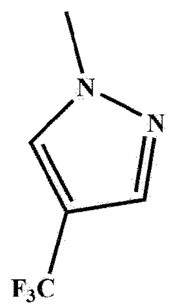

**Comparative Example 4.**

A lithium secondary battery was prepared in the same manner as in Comparative Example 3 except that an amount of the compound represented by Formula Z1 was changed to 10 wt% during the preparation of the non-aqueous electrolyte solution.

**Comparative Example 5.**

A lithium secondary battery was prepared in the same manner as in Example 1 except that a compound represented by the following Formula Z2 was used instead of the compound represented by Formula 1A during the preparation of the non-aqueous electrolyte solution.

[Formula Z2]

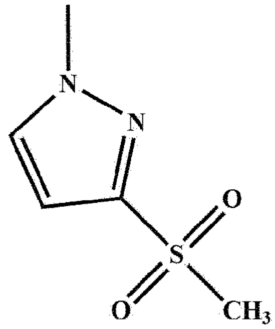

**Comparative Example 6.**

A lithium secondary battery was prepared in the same manner as in Comparative Example 5 except that an amount of the compound represented by Formula Z2 was changed to 10 wt% during the preparation of the non-aqueous electrolyte solution.

**Comparative Example 7.**

A lithium secondary battery was prepared in the same manner as in Example 1 except that a compound represented by the following Formula Z3 was used instead of the compound represented by Formula 1A during the preparation of the non-aqueous electrolyte solution.

[Formula Z3]

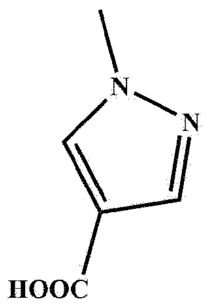

**<Experimental Examples: Battery Performance Evaluation>**

**Experimental Example 1. Measurement of Capacity and Resistance After High-temperature Storage**

After a formation process was performed on the lithium secondary batteries prepared in the examples and the comparative examples, the lithium secondary batteries were constant current/constant voltage (CC/CV) charged (0.05C cut off) at 0.33C rate to 4.25V at 25°C and were constant current (CC) discharged at 0.33C rate to 2.50V, and initial discharge capacity was then measured. A charge state was set to a state of charge (SOC) of 50% based on the measured discharge capacity, and initial resistance was confirmed by measuring a voltage drop generated in a state in which a discharge pulse was applied for 10 seconds at a constant current of 2.5C.

Thereafter, each battery was fully charged to an SOC of 100% under the same conditions and stored at a high temperature (60°C) for 8 weeks. Thereafter, after each battery was transferred to a charger and discharger at room temperature (25°C), capacity and resistance were measured again, capacity retention and resistance increase rate were calculated through Equations 1 and 2 below, and the results thereof are presented in Table 1 below.

Equation 1:

$$\text{Capacity retention(\%)} = (\text{discharge capacity after high-temperature storage/initial discharge capacity}) \times 100$$

$$\text{Resistance increase rate(\%)} = \{ \text{(resistance after high-temperature storage - initial resistance)/initial resistance} \} \times 100 \quad \text{Equation 2:}$$

**Experimental Example 2. Measurement of Gas Generation Amount After High-temperature Storage**

After a formation process was performed on the lithium secondary batteries prepared in the examples and the comparative examples, the lithium secondary batteries were charged under constant current/constant voltage conditions (0.05C cut off) at 0.33C rate to 4.25V at 25°C such that the lithium secondary batteries were fully charged to an SOC of 100%. After the fully-charged batteries were stored at 60°C for 8 weeks and then transferred to a charger and discharger at room temperature (25°C), gas collected in a pouch was analyzed using a gas chromatography-thermal conductivity detector (GC-TCD), and a relative gas generation amount of each battery was calculated based on 100% of a gas generation amount measured in Comparative Example 1 and presented in Table 1 below.

**Experimental Example 3. High-temperature Lifetime Evaluation**

After a formation process was performed on the lithium secondary batteries prepared in the examples and the comparative examples, the lithium secondary batteries were constant current/constant voltage (CC/CV) charged (0.05C cut off) at 0.33C rate to 4.25V at 45°C and were constant current (CC) discharged at 0.33C rate to 2.5V.

Performance of the charging/discharging once was set as one cycle, and, after the same charging/discharging was repeated 200 times, a capacity retention and a resistance increase rate (DCIR increase) were measured through Equation 3 and Equation 4 below. Measurement results are presented in Table 1 below.

$$\text{Capacity retention(\%)} = \text{(discharge capacity after 200 cycles/discharge capacity after one cycle\}} \times 100 \quad \text{Equation 3:}$$

$$\text{Resistance increase rate(\%)} = \{ \text{(resistance after 200 cycles - resistance after one cycle) /resistance after one cycle} \} \times 100 \quad \text{Equation 4:}$$

Experimental Example 4.Thermal Safety Evaluation

After a formation process was performed on the lithium secondary batteries prepared in the examples and the comparative examples, the lithium secondary batteries were charged under constant current/constant voltage conditions (0.05C cut off) at 0.33C rate to 4.25V at 25°C such that the lithium secondary batteries were fully charged to an SOC of 100%. A hot box evaluation test was conducted in which the fully-charged batteries were heated to 140°C at a heating rate of 5°C/min and were then left standing for 1 hour to confirm whether or not the batteries were ignited.

The results thereof are listed in Table 1 below, a case, in which the battery was not ignited, was indicated as "PASS", and a case, in which the battery was ignited, was indicated as "FAIL".

[Table 1]

| | Formula 1 | | VEC | Experimental Example 1 (high-temperature storage) | | Experimental Example 2 | Experimental Example 3 (high-temperature lifetime) | | Experimental Example 4 |
|---|---|---|---|---|---|---|---|---|---|
| | Structure | Amount (wt%) | Amount (wt%) | Capacity retention (%) | Resistance increase rate (%) | Gas generation amount (%) | Capacity retention (%) | Resistance increase rate (%) | Thermal safety evaluation |
| Example 1 | 1A | 0.05 | - | 94 | 6 | 72 | 90 | 6 | Pass |
| Example 2 | 1A | 0.05 | 0.5 | 95 | 8 | 70 | 92 | 8 | Pass |
| Example 3 | 1A | 10 | - | 94 | 8 | 67 | 91 | 8 | Pass |
| Example 4 | 1A | 10 | 0.5 | 94 | 7 | 75 | 90 | 7 | Pass |
| Example 5 | 1B | 0.05 | - | 96 | 9 | 75 | 91 | 8 | Pass |
| Example 6 | 1B | 10 | - | 94 | 5 | 74 | 90 | 5 | Pass |
| Example 7 | 1C | 0.05 | - | 95 | 8 | 76 | 92 | 7 | Pass |
| Example 8 | 1C | 10 | - | 94 | 7 | 72 | 90 | 6 | Pass |
| Example 9 | 1D | 0.05 | - | 95 | 8 | 70 | 92 | 8 | Pass |
| Example 10 | 1E | 0.05 | - | 96 | 9 | 72 | 90 | 5 | Pass |
| Example 11 | 1F | 0.05 | - | 94 | 6 | 73 | 91 | 7 | Pass |
| Comparative Example 1 | - | - | - | 80 | 28 | Basis (100) | 78 | 35 | Fail |
| Comparative Example 2 | - | - | 0.5 | 87 | 23 | 138 | 84 | 28 | Fail |
| Comparative Example 3 | Z1 | 0.05 | - | 86 | 15 | 112 | 85 | 20 | Fail |
| Comparative Example 4 | Z1 | 10 | - | 82 | 22 | 118 | 84 | 25 | Pass |
| Comparative Example 5 | Z2 | 0.05 | - | 85 | 17 | 117 | 86 | 20 | Fail |
| Comparative Example 6 | Z2 | 10 | - | 78 | 28 | 122 | 81 | 22 | Pass |
| Comparative Example 7 | Z3 | 10 | - | 80 | 29 | 128 | 81 | 25 | Fail |

According to the results of Table 1, it may be confirmed that the batteries of Examples 1 to 11, in which the electrolyte solution including the compound represented by Formula 1 was used, had better capacity and resistance characteristics after high-temperature storage, less gas generation amount, and better life characteristics and safety at high temperatures than the batteries of Comparative Examples 1 to 7 in which the electrolyte solution not including the compound represented by Formula 1 was used.

Particularly, even if the electrolyte solution included a compound with a pyrazole structure, with respect to the compounds such as Formula Z1 in which an ester group was not substituted, Formula Z2 in which a sulfonyl ($-SO_2-$) group was substituted instead of an ester, or Formula Z3 in which a carboxyl group was substituted, it may be confirmed that performances in all evaluation items were significantly degraded. The reason for this is that, since the compound represented by Formula 1 included an unshared electron pair at an ester functional group and a nitrogen bond in pyrazole, a stable film may be formed through strong binding to the transition metal on the surface of the positive electrode, but, with respect to the comparative examples, this effect may not be obtained. In addition, since ability of the compound represented by Formula 1 to move lithium was improved by the unshared electron pair of oxygen, a film that helps to improve output of the battery may be formed. However, in a case in which the carboxyl group was substituted as in Formula Z3, since acidification of the electrolyte solution and the resulting side reaction were caused while hydrogen ions were dissociated, the same effect as in Formula 1 may not be obtained.

That is, it may be confirmed that the electrolyte solution including the compound represented by Formula 1 as in the present invention had an effect of contributing to improve high-temperature storage and high-temperature life characteristics of the lithium secondary battery.

## Claims

1. A non-aqueous electrolyte solution for a lithium secondary battery, comprising a lithium salt; an organic solvent; and a compound represented by Formula 1:

[Formula 1]

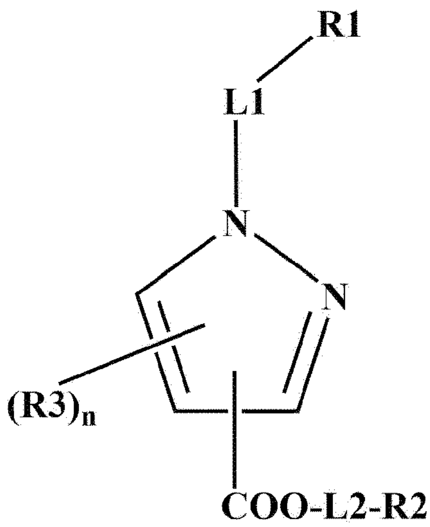

in Formula 1,

L1 is a direct bond or an alkylene group having 1 to 10 carbon atoms,
R1 is an alkyl group having 1 to 10 carbon atoms or a nitrile group,
L2 is a direct bond, an alkylene group having 1 to 10 carbon atoms, an alkyleneoxy group having 1 to 10 carbon atoms, or a sulfonyl group,
R2 is a fluorine-substituted or unsubstituted alkyl group having 1 to 10 carbon atoms, a nitrile group, or an isocyanate group,
R3 is a fluorine-substituted or unsubstituted alkyl group having 1 to 10 carbon atoms,
n is an integer of any one of 0 to 2, and when n is 2, the two R3s are same or different from each other.

2. The non-aqueous electrolyte solution for a lithium secondary battery of claim 1, wherein R2 in Formula 1 is an alkyl

group having 1 to 5 carbon atoms, a fluoroalkyl group having 1 to 5 carbon atoms, or an isocyanate group.

3. The non-aqueous electrolyte solution for a lithium secondary battery of claim 1, wherein R3 in Formula 1 is a fluorine-substituted alkyl group having 1 to 10 carbon atoms.

4. The non-aqueous electrolyte solution for a lithium secondary battery of claim 1, wherein the compound represented by Formula 1 is represented by Formula 1-1 or Formula 1-2:

[Formula 1-1]

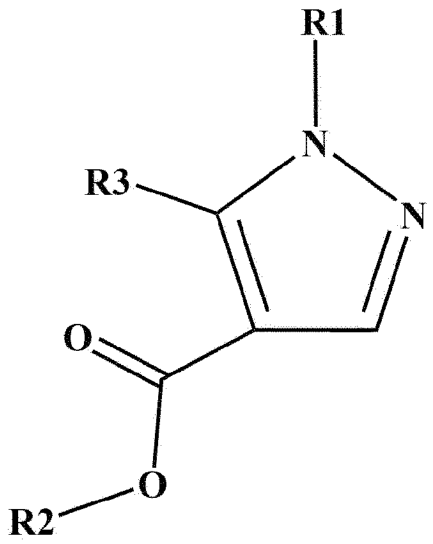

[Formula 1-2]

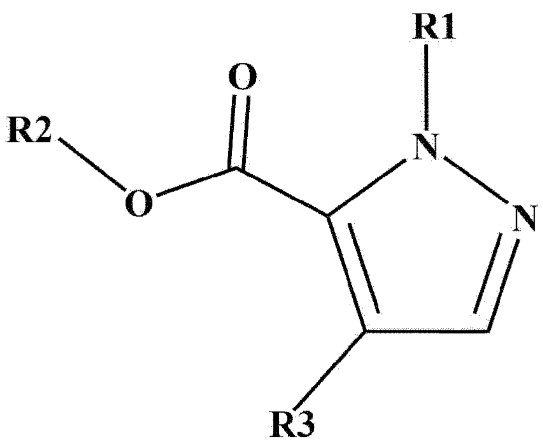

in Formulae 1-1 and 1-2,
R1 to R3 are as defined in Formula 1.

5. The non-aqueous electrolyte solution for a lithium secondary battery of claim 1, wherein an amount of the compound represented by Formula 1 is in a range of 0.01 wt% to 15 wt% based on a total weight of the non-aqueous electrolyte solution.

6. The non-aqueous electrolyte solution for a lithium secondary battery of claim 1, wherein an amount of the compound represented by Formula 1 is in a range of 0.05 wt% to 10 wt% based on a total weight of the non-aqueous electrolyte solution.

**7.** The non-aqueous electrolyte solution for a lithium secondary battery of claim 1, further comprising at least one additive selected from the group consisting of vinylene carbonate, vinyl ethylene carbonate, 1,3-propane sultone, ethylene sulfate, lithium tetrafluoroborate, lithium difluoro(oxalato)borate, and lithium difluorophosphate.

**8.** The non-aqueous electrolyte solution for a lithium secondary battery of claim 1, wherein the organic solvent comprises a mixture of at least two selected from the group consisting of a cyclic carbonate-based solvent, a linear carbonate-based solvent, and a linear ester-based solvent.

**9.** A lithium secondary battery comprising:

a positive electrode including a positive electrode active material;
a negative electrode including a negative electrode active material;
a separator disposed between the positive electrode and the negative electrode; and
the non-aqueous electrolyte solution of claim 1.

**10.** The lithium secondary battery of claim 9, wherein the positive electrode active material comprises a lithium composite transition metal oxide represented by Formula 2:

[Formula 2] $Li_{1+x}(Ni_aCo_bMn_cM_d)O_2$

in Formula 2,

M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
1+x, a, b, c, and d are atomic fractions of each independent element,
wherein $-0.2 \le x \le 0.2$, $0.6 \le a < 1$, $0 < b \le 0.3$, $0 < c \le 0.3$, $0 \le d \le 0.1$, and $a+b+c+d=1$.

**11.** The lithium secondary battery of claim 10, wherein a, b, c, and d in Formula 2 satisfy $0.70 \le a < 1$, $0 < b \le 0.2$, $0 < c \le 0.2$, and $0 \le d \le 0.1$, respectively.

**Patentansprüche**

**1.** Nichtwässrige Elektrolytlösung für eine Lithiumsekundärbatterie, umfassend ein Lithiumsalz; ein organisches Lösungsmittel; und eine durch die Formel 1 dargestellte Verbindung:

[Formel 1]

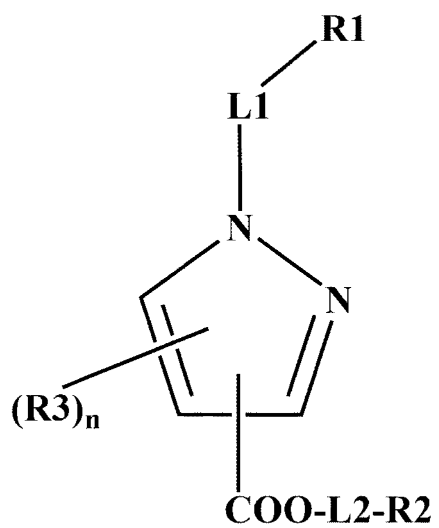

wobei, in Formel 1,

L1 eine direkte Bindung oder eine Alkylengruppe mit 1 bis 10 Kohlenstoffatomen ist,

R1 eine Alkylgruppe mit 1 bis 10 Kohlenstoffatomen oder eine Nitrilgruppe ist,
L2 eine direkte Bindung, eine Alkylengruppe mit 1 bis 10 Kohlenstoffatomen, eine Alkylenoxygruppe mit 1 bis 10 Kohlenstoffatomen oder eine Sulfonylgruppe ist,
R2 eine fluorsubstituierte oder unsubstituierte Alkylgruppe mit 1 bis 10 Kohlenstoffatomen, eine Nitrilgruppe oder eine Isocyanatgruppe ist,
R3 eine fluorsubstituierte oder unsubstituierte Alkylgruppe mit 1 bis 10 Kohlenstoffatomen ist,
n eine ganze Zahl von 0 bis 2 ist, und die zwei R3 gleich sind oder sich voneinander unterscheiden, wenn n 2 ist.

2. Nichtwässrige Elektrolytlösung für eine Lithiumsekundärbatterie gemäß Anspruch 1, worin R2 in Formel 1 eine Alkylgruppe mit 1 bis 5 Kohlenstoffatomen, eine Fluoralkylgruppe mit 1 bis 5 Kohlenstoffatomen oder eine Isocyanatgruppe ist.

3. Nichtwässrige Elektrolytlösung für eine Lithiumsekundärbatterie gemäß Anspruch 1, worin R3 in Formel 1 eine fluorsubstituierte Alkylgruppe mit 1 bis 10 Kohlenstoffatomen ist.

4. Nichtwässrige Elektrolytlösung für eine Lithiumsekundärbatterie gemäß Anspruch 1, worin die durch Formel 1 dargestellte Verbindung durch Formel 1-1 oder Formel 1-2 dargestellt ist:

[Formel 1-1]

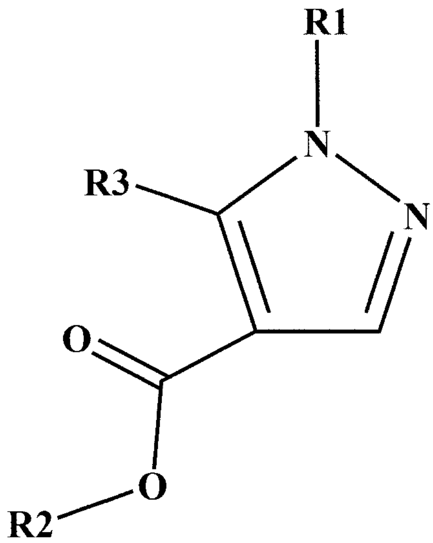

[Formel 1-2]

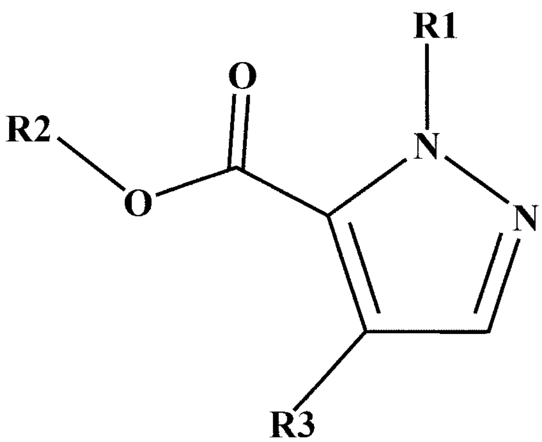

wobei, in den Formeln 1-1 und 1-2,
R1 bis R3 wie in Formel 1 definiert sind.

**5.** Nichtwässrige Elektrolytlösung für eine Lithiumsekundärbatterie gemäß Anspruch 1, worin eine Menge der durch Formel 1 dargestellten Verbindung in einem Bereich von 0,01 Gew.-% bis 15 Gew.-%, basierend auf dem Gesamtgewicht der nichtwässrigen Elektrolytlösung, liegt.

**6.** Nichtwässrige Elektrolytlösung für eine Lithiumsekundärbatterie gemäß Anspruch 1, worin eine Menge der durch Formel 1 dargestellten Verbindung in einem Bereich von 0,05 Gew.-% bis 10 Gew.-%, basierend auf dem Gesamtgewicht der nichtwässrigen Elektrolytlösung, liegt.

**7.** Nichtwässrige Elektrolytlösung für eine Lithiumsekundärbatterie gemäß Anspruch 1, ferner umfassend mindestens ein Additiv, ausgewählt aus der Gruppe, bestehend aus Vinylencarbonat, Vinylethylencarbonat, 1,3-Propansulton, Ethylensulfate, Lithiumtetrafluorborat, Lithiumdifluor(oxalato)borat und Lithiumdifluorphosphat.

**8.** Nichtwässrige Elektrolytlösung für eine Lithiumsekundärbatterie gemäß Anspruch 1, worin das organische Lösungsmittel ein Gemisch aus mindestens zwei umfasst, ausgewählt aus der Gruppe, bestehend aus einem Lösungsmittel basierend auf cyclischem Carbonat, einem Lösungsmittel basierend auf linearem Carbonat und einem Lösungsmittel basierend auf linearem Ester.

**9.** Lithiumsekundärbatterie, umfassend:

eine positive Elektrode, die ein Aktivmaterial für eine positive Elektrode enthält;
eine negative Elektrode, die ein Aktivmaterial für eine negative Elektrode enthält;
einen zwischen der positiven Elektrode und der negativen Elektrode angeordneten Separator; und
die nichtwässrige Elektrolytlösung gemäß Anspruch 1.

**10.** Lithiumsekundärbatterie gemäß Anspruch 9, worin das Aktivmaterial für eine positive Elektrode ein durch Formel 2 dargestelltes Lithium-Komposit-Übergangsmetalloxid umfasst:

[Formel 2] $Li_{1+x}(Ni_aCo_bMn_cM_d)O_2$

wobei, in Formel 2,

M mindestens eines ist, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
1+x, a, b, c und d atomare Anteile jedes unabhängigen Elements sind,
worin $-0{,}2 \le x \le 0{,}2$, $0{,}6 \le a < 1$, $0 < b \le 0{,}3$, $0 < c \le 0{,}3$, $0 \le d \le 0{,}1$ und $a+b+c+d=1$.

**11.** Lithiumsekundärbatterie gemäß Anspruch 10, worin a, b, c und d in Formel 2 jeweils $0{,}70 \le a < 1$, $0 < b \le 0{,}2$, $0 < c \le 0{,}2$ und $0 \le d \le 0{,}1$ erfüllen.

**Revendications**

**1.** Solution d'électrolyte non aqueux pour batterie secondaire au lithium, comprenant un sel de lithium ; un solvant organique ; et un composé représenté par la Formule 1 :

[Formule 1]

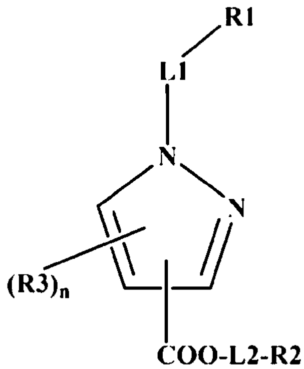

dans la Formule 1,

L1 est une liaison directe ou un groupe alkylène présentant 1 à 10 atomes de carbone,
R1 est un groupe alkyle présentant 1 à 10 atomes de carbone ou un groupe nitrile,
L2 est une liaison directe, un groupe alkylène présentant 1 à 10 atomes de carbone, un groupe alkylèneoxy présentant 1 à 10 atomes de carbone, ou un groupe sulfonyle,
R2 est un groupe alkyle substitué par du fluor ou non substitué présentant 1 à 10 atomes de carbone, un groupe nitrile, ou un groupe isocyanate,
R3 est un groupe alkyle substitué par du fluor ou non substitué présentant 1 à 10 atomes de carbone,
n est un entier de l'un quelconque de 0 à 2, et lorsque n est 2, les deux R3 sont identiques l'un à l'autre ou différents l'un de l'autre.

2. Solution d'électrolyte non aqueux pour batterie secondaire au lithium selon la revendication 1, dans laquelle R2 dans la Formule 1 est un groupe alkyle présentant de 1 à 5 atomes de carbone, un groupe fluoroalkyle présentant de 1 à 5 atomes de carbone, ou un groupe isocyanate.

3. Solution d'électrolyte non aqueux pour batterie secondaire au lithium selon la revendication 1, dans laquelle R3 dans la Formule 1 est un groupe alkyle substitué par du fluor présentant 1 à 10 atomes de carbone.

4. Solution d'électrolyte non aqueux pour batterie secondaire au lithium selon la revendication 1, dans laquelle le composé représenté par la Formule 1 est représenté par la Formule 1-1 ou la Formule 1-2 :

[Formule 1-1]

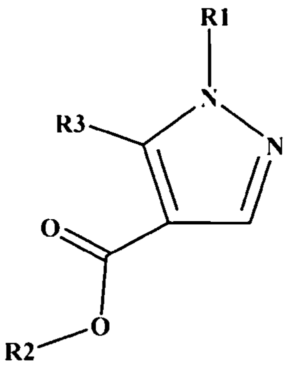

[Formule 1-2]

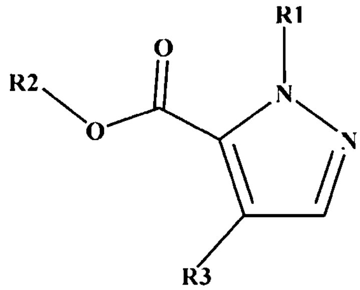

dans les Formules 1-1 et 1-2,
R1 à R3 sont tels que définis dans la Formule 1.

5. Solution d'électrolyte non aqueux pour batterie secondaire au lithium selon la revendication 1, dans laquelle une quantité du composé représenté par la Formule 1 se trouve dans une plage de 0,01 % en poids à 15 % en poids sur la base d'un poids total de la solution d'électrolyte non aqueux.

6. Solution d'électrolyte non aqueux pour batterie secondaire au lithium selon la revendication 1, dans laquelle une quantité du composé représenté par la Formule 1 se trouve dans une plage de 0,05 % en poids à 10 % en poids sur la base d'un poids total de la solution d'électrolyte non aqueux.

7. Solution d'électrolyte non aqueux pour batterie secondaire au lithium selon la revendication 1, comprenant en outre au moins un additif sélectionné dans le groupe consistant en carbonate de vinylène, carbonate de vinyléthylène, 1,3-propane sultone, sulfate d'éthylène, tétrafluoroborate de lithium, difluoro(oxalato)borate de lithium, et difluorophosphate de lithium.

8. Solution d'électrolyte non aqueux pour batterie secondaire au lithium selon la revendication 1, dans laquelle le solvant organique comprend un mélange d'au moins deux sélectionnés dans le groupe consistant en un solvant cyclique à base de carbonate, un solvant linéaire à base de carbonate, et un solvant linéaire à base d'ester.

9. Batterie secondaire au lithium comprenant :

   une électrode positive incluant un matériau actif d'électrode positive ;
   une électrode négative incluant un matériau actif d'électrode négative ;
   un séparateur disposé entre l'électrode positive et l'électrode négative ; et
   la solution d'électrolyte non aqueux selon la revendication 1.

10. Batterie secondaire au lithium selon la revendication 9, dans laquelle le matériau actif d'électrode positive comprend un oxyde de métal de transition composite au lithium représenté par la Formule 2 :

[Formule 2] $Li_{1+x}(Ni_aCo_bMn_cM_d)O_2$

dans la Formule 2,

   M est au moins un sélectionné dans le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo, et
   1 + x, a, b, c, et d sont des fractions atomiques de chaque élément indépendant,
   dans laquelle $-0,2 \leq x \leq 0,2$, $0,6 \leq a < 1$, $0 < b \leq 0,3$, $0 < c \leq 0,3$, $0 \leq d \leq 0,1$, et $a + b + c + d = 1$.

11. Batterie secondaire au lithium selon la revendication 10, dans laquelle a, b, c, et d dans la Formule 2 sont $0,70 \leq a \leq 1$, $0 \leq b \leq 0,2$, $0 \leq c \leq 0,2$, et $0 \leq d \leq 0,1$, respectivement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220085281
- WO 1020230086887 A
- WO 2011043403 A